**Europäisches Patentamt**

**European Patent Office**

**Office européen des brevets**

(19)

(11) Veröffentlichungsnummer: **0 275 908**

**A2**

(12) **EUROPÄISCHE PATENTANMELDUNG**

(21) Anmeldenummer: **88100370.1**

(22) Anmeldetag: **13.01.88**

(51) Int. Cl.4 **C09J 3/14** , C08G 18/63 , C08G 18/66 , C08G 18/48 , //C08G18/10

(30) Priorität: **23.01.87 DE 3701888**

(43) Veröffentlichungstag der Anmeldung: **27.07.88 Patentblatt 88/30**

(84) Benannte Vertragsstaaten: **DE FR GB IT**

(71) Anmelder: **BAYER AG**

**D-5090 Leverkusen(DE)**

(72) Erfinder: **Jansen, Bernhard, Dr.**
**Roggendorfstrasse 65**
**D-5000 Köln 80(DE)**
Erfinder: **Müller, Hanns Peter, Dr.**
**Weizenfeld 36**
**D-5060 Bergisch-Gladbach 2(DE)**
Erfinder: **Hombach, Rudolf, Dr.**
**Johann Janssenstrasse 24**
**D-5090 Leverkusen(DE)**

(54) **Klebemittel und seine Verwendung zur Herstellung von Verklebungen.**

(57) Ein neues, unter dem Einfluß von Luftfeuchtigkeit aushärtbares Klebemittel, bestehend aus

a) einem NCO-Prepolymeren mit einem NCO-Gehalt von 2,5 bis 25 Gew.-% auf Basis eines organischen Polyisocyanats und eines füllstoffhaltigen Polyols und gegebenenfalls

b) den üblichen Hilfs-und Zusatzstoffen ist zur Herstellung von Verklebungen beliebiger Substrate geeignet.

EP 0 275 908 A2

## Klebemittel und seine Verwendung zur Herstellung von Verklebungen

Die Erfindung betrifft neue Klebemittel auf Basis von freie Isocyanatgruppen aufweisenden Umsetzungsprodukten aus überschüssigen Mengen an organischen Polyisocyanaten und durch Polymerisation bzw. Copolymerisation von olefinisch ungesättigten Monomeren modifizierten organischen Polyhydroxylverbindungen und die Verwendung dieser Klebemittel zur Herstellung von Verklebungen beliebiger Substrate.

Die Verwendung von Polyisocyanaten bzw. von Polyisocyanat-Zubereitungen, insbesondere von Polyurethan-Prepolymeren, die freie Isocyanatgruppen enthalten, als Klebemitel ist bereits seit langem bekannt und hat ebenfalls ihren Niederschlag in der Literatur gefunden; M. Dollhausen, W. Warrach, Polyurethan Adhesives Technology, Adhesives Age, June 1982, S. 28; R. Jordan, Polyurethane als Klebstoffe, Seifen, Öle, Fette, Wachse, 109 (1983), Nr. 11/12, S. 333-336; B. Kujawa-Penczek, P. Penczek, Polyurethan-Klebstoffe, Fortschritte in den 80er Jahren, Adhäsion 28 (1984), Nr. 3, S. 7-12; B. Kujawa-Penczek, P. Penczek, S. Osiecki, Adhäsion 28 (1984), Nr. 6, S. 30-32.

Wie jetzt überraschend gefunden wurde, stellen freie Isocyanatgruppen aufweisende Prepolymere auf Basis von überschüssigen Mengen an organischen Polyisocyanaten und bestimmten, nachstehend näher beschriebenen, mit Polymerisaten oder Copolymerisaten von olefinisch ungesättigten Monomeren modifizierten Polyhydroxylverbindungen besonders wertvolle Bindemittel für derartige Einkomponenten-Klebemittel dar, die insbesondere die Herstellung von Verklebungen mit ausgezeichneten Scherfestigkeiten gestatten.

Gegenstand der Erfindung sind unter dem Einfluß von Luftfeuchtigkeit aushärtbare Klebemittel, bestehend aus

a) einem 2,5 bis 25 Gew.-% an freien Isocyanatgruppen aufweisenden Umsetzungsprodukt aus
  a1) mindestens einem organischen Polyisocyanat und
  a2) mindestens einem füllstoffhaltigen Polyol
und gegebenenfalls
b) und üblichen Hilfs-und Zusatzstoffen,
dadurch gekennzeichnet, daß die Komponente a2) eine Dispersion ist mit
  1) einem Polyetherpolyol,
  2) einem Polymerisat radikalisch polymerisierter olefinischer Monomerer,
  3) einem Pfropfpolyether aus dem Polyetherpolyol mit darauf gepfropftem Polymerisat aus radikalisch polymerisierten olefinischen Monomeren,
  4) gegebenenfalls weiteren organischen Polyhydroxylverbindungen, wobei die Dispersion durch Polymerisation der Monomeren im Polyetherpolyol erzeugt wurde und
wobei der Anteil der polymerisierten olefinischen Monomere 1 - 50 Gew.%, vorzugsweise 2,5 - 50 Gew.-%, bezogen auf das Gesamtgewicht a2), beträgt.

Gegenstand der Erfindung ist auch die Verwendung dieser Klebemittel zur Herstellung von Verklebungen beliebiger Substrate.

Es ist bereits bekannt, organische Polyisocyanate mit unterschüssigen Mengen an organischen Polyhydroxylverbindungen, die zumindest zum Teil aus "Pfropfpolyethern" bestehen, zu NCO-Prepolymeren umzusetzen. Unter "Pfropfpolyethern" sind hierbei solche Polyetherpolyole zu verstehen, die durch radikalische Polymerisation bzw. Co polymerisation von olefinisch ungesättigten Monomeren in dem Polyetherpolyol als Reaktionsmedium hergestellt worden sind. Derartige NCO-Prepolymere sind beispielsweise in DE-A-3 519 693 oder US-A-3 383 351 beschrieben. Der vorveröffentlichten Literatur ist jedoch keinerlei Hinweis zu entnehmen, daß derartige NCO-Prepolymere ganz ausgezeichnete Bindemittel für Einkomponenten-Klebemittel darstellen, vielmehr wird in diesen Vorveröffentlichungen insbesondere die Herstellung von Polyurethanschaumstoffen u.a. nach dem Prepolymerprinzip unter Verwendung der genannten NCO-Prepolymeren in Betracht gezogen. Aus DE-A-2 638 759 und EP-A-8444 ist bereits bekannt, wie füllstoffhaltige Polyole hergestellt werden. DE-A-2 638 759 beschreibt polyharnstoffhaltige Polyole, während in EP-A-008 444 Polyole mit Polymerisaten olefinisch ungesättigter Verbindungen als Füllstoff beschrieben werden. Darüber hinaus sind füllstoffhaltige Polyole bekannt aus Oertel, Kunststoffhandbuch, Nr. 7, Polyurethane, 1983, Carl-Hanser-Verlag München, Wien, S. 76.

Die den erfindungsgemäßen Klebemitteln zugrundeliegende Komponente a1) besteht aus mindestens einem organischen Polyisocyanat, d.h. aus beliebigen Verbindungen bzw. Gemischen von Verbindungen, die pro Molekül mindestens zwei organisch gebundene Isocyanatgruppen aufweisen. Hierzu gehören sowohl niedermolekulare Polyisocyanate mit einem unter 400 liegenden Molekulargewicht als auch Modifizierungsprodukte derartiger niedermolekularer Polyisocyanate, die nach an sich bekannten Verfahren des Standes der Technik aus niedermolekularen Polyisocyanaten hergestellt werden können wie z.B. Isocyanurate. Biurete, Allophanate, Carbodiimide und Uretdione.

Geeignete niedermolekulare Polyisocyanate sind beispielsweise solche der Formel

$Q(NCO)_n$

in der n = 2 bis 4, vorzugsweise 2,

und Q einen - aliphatischen Kohlenwasserstoffrest mit 2 bis 18, vorzugsweise 6 bis 10 C-Atomen,

- einen cycloaliphatischen Kohlenwasserstoffrest mit 4 bis 15, vorzugsweise 5 bis 10 C-Atomen,

- einen aromatischen Kohlenwasserstoffrest mit 6 bis 15, vorzugsweise 6 bis 13 C-Atomen,

- oder einen araliphatischen Kohlenwasserstoffrest mit 8 bis 15, vorzugsweise 8 bis 13 C-Atomen

bedeuten.

Geeignete derartige niedermolekulare Polyisocyanate sind z.B. Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanatomethylcyclohexan, Hexahydro-1,3-und/oder -1,4-phenylendiisocyanat, Perhydro-2,4'-und/oder -4,4'-diphenylmethandiisocyanat, 1,3-und 1,4-Phenylendiisocyanat, 2,4-und 2,6-Tolylendiisocyanat sowie beliebige Gemische dieser Isomeren, Diphenylmethan-2,4'-und/oder 4,4'-diisocyanat, Naphthylen-1,5-diisocyanat, Triphenylmethan-4,4',4''-triisocyanat oder Polyphenyl-polymethylenpolyisocyanate, wie sie durch Anilin-Formaldehyd-Kondensation und an schließende Phosgenierung erhalten werden. Vorzugsweise werden die bekannten Polyisocyanate bzw. Polyisocyanatgemische der Diphenylmethanreihe als Komponente a1) verwendet. Hierzu gehören sowohl 4,4'-Diisocyanatodiphenyl-methan als auch dessen Gemische mit 2,4'-Diisocyanatodiphenylmethan und gegebenenfalls untergeordne-ten Mengen an 2,2'-Diisocyanatodiphenylmethan als auch Abmischungen dieser Isomeren mit ihren höheren Homologen, wie sie in an sich bekannter Weise durch Phosgenierung von Anilin/Formaldehyd-Kondensaten zugänglich sind. Auch durch partielle Urethanisierung der Isocyanatgruppen dieser Isocyanate modifizierte Polyisocyanate bzw. Polyisocyanatgemische der Diphenylmethanreihe gehören zu den bevorzugten Ausgangskomponenten a1).

Bei der Komponente a2) handelt es sich um füllstoffhaltige Polyole mit Pfropfpolyethern. bzw. um deren Abmischungen mit den üblichen Polyhydroxylverbindungen der Polyurethanchemie, wie sie beispielsweise in US-PS 4 218 543, Kolonne 7, Zeile 29 bis Kolonne 9, Zeile 25 beispielhaft offenbart sind.

Bei den "Pfropfpolyethern" handelt es sich vorzugsweise um Polyetherpolyole, die unmodifiziert ein aus der Funktionalität und dem Hydroxylgruppengehalt errechenbares (mittleres) Molekulargewicht von 500 bis 9000, vorzugsweise 1000 bis 6000 aufweisen, und die durch radikalische Polymerisation oder Copolymerisation von olefinisch ungesättigten Monomeren in dem Polyetherpolyol als Reaktionsmedium modifiziert worden sind. Die bei dieser Polymerisations-bzw. Copolymerisationsreaktion entstehenden Polymerisate liegen in den Polyetherpolyolen zumindest teilweise in Form von echten Pfropfpolymerisaten vor, wobei jedoch nicht ausgeschlossen werden kann, daß bei der Herstellung der "Pfropfpolyether" durch radikalische Polymerisation bzw. Copolymerisation in situ auch Polymerisate bzw. Copolymerisate entstehen, die in Abmischung mit der Polyetherkomponente vorliegen.

Die Herstellung der "Pfropfpolyether" kann beispielsweise gemäß EP-A-0008444 unter Verwendung der dort genannten Polyetherpolyole und der dort genannten olefinisch ungesättigten Monomeren erfolgen. Vorzugsweise werden auch erfindungsgemäß solche "Pfropfpolyether" verwendet, die unter Verwendung von Acrylnitril oder von Gemischen aus Acrylnitril und Styrol als olefinisch ungesättigte Monomere hergestellt worden sind, wobei Acrylnitril und Styrol im Gewichtsverhältnis von 20:80 bis 100:0 zum Einsatz gelangen.

Bei der Komponente a2) handelt es sich entweder um reine füllstoffhaltige Polyole oder um deren Abmischungen mit Polyhydroxylverbindungen der aus der Polyurethanchemie an sich bekannten Art, wie sie beispielsweise in dem oben zititerten US-Patent beispielhaft offenbart sind. Als Abmischkomponenten eignen sich insbesondere jedoch auch einfache mehrwertige Alkohole des Molekulargewichts 62 bis 599, vorzugsweise 62 bis 200, wie z.B. Ethylenglykol, Trimethylolpropan, Propandiol-1,2 oder Butandiol-1,2 und/oder höhermolekulare Polyether-und/oder Polyesterpolyole der aus der Polyurethanchemie an sich bekannten Art mit Molekulargewichten von 600 bis 8000, vorzugsweise 800 bis 4000, die mindestens 2, in der Regel 2 bis 8, vorzugsweise 2 bis 4, primäre und/oder sekundäre Hydroxylfunktionen aufweisen, deren Herstellung gemäß oder in Analogie zu der in US-PS 4 218 543 gemachten Offenbarung erfolgt.

Wenn als Komponente a2) Abmischungen von "Pfropfpolyethern" mit unmodifizierten Polyhydroxylverbindungen zum Einsatz gelangen, so können beliebige derartige Abmischungen zum Einsatz gelangen, wobei lediglich darauf zu achten ist, daß in den Abmischungen der Gehalt an Polymerisaten bzw. Copolymerisaten innerhalb der genannten Grenzen liegt.

Die gegebenenfalls in den erfindungsgemäßen Klebemitteln vorliegenden Hilfs-und Zusatzstoffe b) bestehen aus in der Polyurethanchemie an sich bekannten Substanzen. Geeignete Komponente b) sind beispielsweise die aus der Klebstoff-und Lacktechnologie bekannten Lösungsmittel wie z.B. Toluol, Xylol,

3

Ethylacetat, Butylacetat, Methylethylketon, Methylisobutylketon, Monoethyletheracetat oder beliebige Gemische derartiger Lösungsmittel.

Weitere Komponente b) sind beispielsweise Pigmente, Füllstoffe, auch anorganische Füllstoffe wie z.B. Bariumsulfat, Calciumcarbonat, Quarz, Kreide, gefällte Kieselsäure, Talkum, Zinkoxid und andere, Verlaufhilfsmittel oder oberflächenaktive Substanzen.

Zu den Komponenten b) gehören ebenfalls katalytisch wirksame Substanzen, die üblicherweise in der Polyurethanchemie verwendet werden. Eine Literaturübersicht über die gebräuchlichen Katalysatoren und deren Wirkungsweise geben: A. Farkas und C.A Mills, Advan. Catalysis, 13, 393 (1962); J.H. Saunders und K.C. Frisch, Polyurethanes Part I, Wiley-Interscience, New York 1962; Chap. VI, L.P. Rumao, J. Macromol. Sci.-Revs. Macromol. Chem. 5/1, 103-150 (1970).

Besonders bevorzugte Katalysatoren sind die in DE-OS 3 326 566 beschriebenen Komplexe bzw. Anlagerungsprodukte von Zinnverbindungen und p-Toluolsulfonylisocyanat, die auch in situ in dem Prepolymeren aus ihren Einzelbestandteilen hergestellt werden können.

Zur Herstellung der NCO-Prepolymeren a) werden die Einzelkomponenten a1) und a2) unter Einhaltung eines NCO/OH-Äquivalentverhältnisses von ca. 1,5:1 bis 20:1, vorzugsweise 5:1 bis 15:1 bei ca. 30 bis 80°C liegenden Temperaturen miteinander zur Reaktion gebracht. Es resultieren auf diese Weise NCO-Prepolymere mit einem NCO-Gehalt von 2,5 bis 25, vorzugsweise 6 bis 20 Gew.-% und einem (mittleren) Molekulargewicht von ca. 400 bis 30 000, vorzugsweise 600 bis 20 000 und insbesondere 800 bis 10 000.

Aus den gemachten Angaben bezüglich des Äquivalentverhältnisses geht hervor, daß im Rahmen der vorliegenden Erfindung unter "NCO-Prepolymeren" bzw. unter "Prepolymeren mit endständigen Isocyanatgruppen" sowohl die Umsetzungsprodukte als solche, als auch ihre Gemische mit überschüssigen Mengen an nicht umgesetzten Ausgangspolyisocyanat, die oft auch als "Semiprepolymere" bezeichnet werden, zu verstehen sind.

Die so erhaltenen NCO-Prepolymeren stellen bereits ohne Zusatz von Hilfs-und Zusatzmitteln b) erfindungsgemäße Klebemittel dar und können gewünschtenfalls durch Abmischung mit Hilfs-und Zusatzmitteln b) der beispielhaft genannten Art weiter modifiziert werden.

Die erfindungsgemäßen Klebemittel weisen bei Ausschluß von Feuchtigkeit eine sehr gute Lagerstabilität auf und sind als verhältnismäßig niedrigviskose Substanzen gut verarbeitbar. Die offene Zeit der Klebemittel bzw. die Trocknungsgeschwindigkeit der unter Verwendung der Klebemittel hergestellten Klebeschichten können auf einfache Weise durch Variation der Art und Menge der eingesetzten Katalysatoren den jeweiligen Bedürfnissen angepaßt werden.

Die erfindungsgemäßen Klebemittel eignen sich zur Verklebung beliebiger Substrate. Hier sind beispielsweise die Verklebung von Holz, Metallen, Textilien, Kunststoffen der verschiedensten Art, insbesondere jedoch von Glasfaser-verstärkten Polyesterharzen mit sich selbst, untereinander oder mit anderen Materialien zu nennen. Die unter Verwendung der erfindungsgemäßen Klebemittel hergestellten Verklebungen zeichnen sich insbesondere durch eine ausgezeichnete Scherfestigkeit aus.

Die erfindungsgemäßen Klebemittel eignen sich im übrigen auch als bzw. zur Herstellung von lufttrocknenden Beschichtungsmitteln für beliebige Substrate, da aus den Klebemitteln hergestellte, ausgehärtete Flächengebilde die Eigenschaften von hochwertigen Lacküberzügen aufweisen.

Die Verarbeitung der erfindungsgemäßen Klebe-bzw. Beschichtungsmittel erfolgt nach den üblichen Methoden der Klebstoff-bzw. Beschichtungstechnologie.

In den nachfolgenden Beispielen beziehen sich alle Prozentangaben auf Gewichtsprozente.

Beispiele

Im folgenden verwendete Abkürzungen:

Roh-MDI 4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt: 30,4 %, Viskosität $\eta_{25°C}$: 80 mPas.

DBTL Dibutylzinndilaurat

TosNCOp-Toluolsulfonylisocyanat

Füllstoffhaltiges Polyol 1

400 g eines Polyols (auf Starter Trimethylolpropan gestartetes Polyoxypropylentriol, das 17 Gew.-% an endständigen Polyoxyethylenblöcken enthält und einen Gehalt an primären OH-Gruppen von mehr als 70 %, bezogen auf den Gesamthydroxylgehalt, sowie eine OH-Zahl von 35 aufweist) werden in einer Apparatur bestehend aus einem Dreihalskolben mit einem Tropftrichter, Rückflußkühler, Gaseinleitungsrohr und wirksamen Rührer vorgelegt und unter Stickstoffatmosphäre auf 120°C erhitzt. Eine Mischung aus 400 g des gleichen Polyols, 120 g Acrylnitril, 80 g Styrol und 1,2 g Azobisisobutyronitril (0,6 % bezogen auf die Monomeren) wird durch den Tropftrichter innerhalb von 2,5 Stunden zugegeben; dabei wird die Temperatur im Bereich von 120-130°C gehalten. Nach erfolgter Zugabe wird das Reaktionsgemisch noch 2 Stunden gerührt und schließlich zur Entfernung der Restmonomeren bei einem Vakuum von 14 Torr destilliert. Die Destillation lieferte wenige Gramm Destillat, der Feststoffgehalt entspricht 20 %. Die Dispersion ist sehr feinteilig und hat eine OH-Zahl von 28 mg KOH/g.

Füllstoffhaltiges Polyol 2

800 g des Polyols aus Beispiel 1 werden zusammen mit 44,4 g Hydrazin-Monohydrat (99 %) bei Raumtemperatur in einer Apparatur bestehend aus einem Dreihalskolben mit einem Tropftrichter, Rückflußkühler, Gaseinleitungsrohr und wirksamen Rührer bei Raumtemperatur unter Stickstoffatmosphäre vorgelegt. Das Isocyanat (Toluylendiisocyanat, 2,4-zu 2,6-Isomerenverhältnis 4:1) wird langsam zugetropft; dabei wird die Temperatur durch Kühlen mit einem Eisbad auf 25°C gehalten. Es entsteht durch intensives Rühren eine sehr feinteilige Dispersion. Nach Ende der Zugabe wird im Wasserstrahlvakuum das Hydratwasser bei 25 bis 50°C abdestilliert. Die fertige Dispersion besitzt einen Feststoffgehalt von 20 % und eine OH-Zahl von 28 mg KOH/g.

Füllstoffhaltiges Polyol 3

Die Herstellung dieses füllstoffhaltiges Polyols erfolgt in Analogie zu Beispiel 1. Als Ausgangspolyol diente ein Polyetherpolyol der OH-Zahl 45 mg KOH/g, hergestellt durch Propoxylierung von Trimethylolpropan, anschließende Alkoxylierung des Propoxylierungsprodukts mit einem Gemisch aus gleichen Gewichtsteilen Ethylenoxid und Propylenoxid und schließlich Reaktion des so erhaltenen Zwischenprodukts mit Propylenoxid (Gewichtsverhältnis PO:(PO + EO):PO = 60:30:10). Als Monomeres wird ein Gemisch aus Styrol und Acrylnitril im Gewichtsverhältnis 20:80 in einer solchen Menge eingesetzt, daß das resultierende füllstoffhaltige Polyol einen Polymeranteil von 35 % aufweist. Die Hydroxylzahl des füllstoffhaltigen Polyols liegt bei 28,5 mg KOH/g.

Polyether 1: Polypropylenglykol der OH-Zahl 56 mg KOH/g

Herstellung von erfindungsgemäßen Klebemitteln

Beispiel 1

100 g Roh-MDI werden bei 60°C vorgelegt und dann 100 g des füllstoffhaltigen Polyols 1 so zugegeben, daß 65°C Reaktionstemperatur nicht überschritten werden. Nach 3 Stdn. Reaktion ist ein Isocyanatgehalt von 14 % erreicht; die Viskosität bei 25°C liegt bei 5208 mPas (Produkt klar).
Zur Katalyse werden 0,5 Tle. DBTL und 0,63 Tle. TosNCO zugegeben.

Beispiel 2 (Vergleich)

100 g Roh-MDI werden bei 60°C vorgelegt und dann mit 100 g des füllstoffhaltigen Polyols 2 so versetzt, daß 65°C Reaktionstemperatur nicht überschritten werden.

Nach 2 h 10 Min. Reaktion ist ein Isocyanatgehalt von 13,2 % erreicht, die Viskosität liegt bei 12 608 mPas (25°C) (Produkt milchig-trüb).

Zur Katalyse werden 0,5 Tle. DBTL und 0,63 Tle. TosNCO zugegeben.

Beispiel 3 (Vergleich)

100 g Roh-MDI werden bei 60°C vorgelegt und dann mit 100 g füllstoffhaltigem Polyol 1 so versetzt, daß 65°C Reaktionstemperatur nicht überschritten werden. Nach 2 1/2 Stdn. ist ein Isocyanatgehalt von 13,4 % erreicht, die Viskosität liegt bei 7500 mPas (25°C).

Zur Katalyse werden 0,5 Tle. DBTL und 0,63 Tle. TosNCO zugegeben.

Beispiel 4

125 g Roh-MDI werden bei 60°C vorgelegt und dann mit einem Gemisch aus 100 g des füllstoffhaltigen Polyols 1 und 50 g des Polyethers 1 so versetzt, daß 65°C Reaktionstemperatur nicht überschritten werden. Nach 3 h 40 Min. ist ein Isocyanatgehalt von 12,2 % erreicht; die Viskosität liegt bei 6456 mPas (25°C).

Zur Katalyse werden 0,5 Tle. DBTL und 0,63 Tle. TosNCO zugegeben.

Beispiel 5 (Vergleich)

125 g Roh-DMI werden bei 60°C vorgelegt und dann mit einem Gemisch aus 100 g des füllstoffhaltigen Polyols 2 und 50 g des Polyethers 1 so versetzt, daß 65°C Reaktionstemperatur nicht überschritten werden. Nach 3 h 40 Min. ist ein Isocyanatgehalt von 12,1 % erreicht; die Viskosität liegt bei 13 433 mPas (25°C).

Zur Katalyse werden 0,5 Tle. DBTL und 0,63 Tle. TosNCO zugegeben.

Beispiel 6

80 g Roh-MDI werden bei 60°C vorgelegt und dann mit einem Gemisch aus 41,8 g des füllstoffhaltigen Polyols 3 und 41,7 g des Polyethers 1 so versetzt, daß 65°C Reaktionstemperatur nicht überschritten werden. Nach 5 h 20 Min. est ein Isocyanatgehalt von 13,6 % erreicht; die Viskosität liegt bei 6248 mPas (25°C).

Zur Katalyse werden 0,5 Tle. DBTL und 0,63 Tle. TosNCO zugegeben.

Erfindungsgemäße Verwendung

Beispiel 7

Unter Verwendung der Klebemittel der Beispiele 1 bis 6 werden Verklebungen von Prüfkörpern aus Glasfaser-verstärktem Polyesterharz (30 % Glasgehalt) hergestellt. Die Prüfkörper der Abmessung 2 x 4 x 0,3 cm werden mit Glaspapier leicht angerauht und während ca. 2 Sekunden über kochendes Wasser gehalten, damit die für die Reaktion benötigte Feuchtigkeit an der Oberfläche kondensieren kann. (Diese Maßnahme dient lediglich der Gewährleistung völlig vergleichbarer Prüfbedingungen; unter normalen Umständen reicht die aufgrund der Luftfeuchtigkeit an den Substraten haftende Wassermenge für die Aushärtung völlig aus). Nach dem Auftragen der Klebstoffe mittels eines Pinsels in einer Schichtdicke von 0,15 mm auf die Oberfläche eines der miteinander zu verklebenden Prüfkörper werden diese so zusammengelegt, daß eine überlappte Fläche von 2 cm² vorliegt. Anschließend werden die Prüfkörper mit einem Druck von 0,3 MP zusammengepreßt. Die Scherfestigkeit (DIN 53 282) wird mit einem Spindelvorschub von 100 mm/Min. nach 1 h, 3 h und 24 h ermittelt.

Die Filmtrocknungszeiten und Scherfestigkeiten sind in der nachstehenden Tabelle zusammengefaßt.

| Beispiel Nr. | Filmtrocknungszeit bei 50 % rel. Luft- feuchte und 23°C [Min.] | Scherfestigkeiten auf S M C nach [N/mm$^2$] | | |
|---|---|---|---|---|
| | | 1 Std. | 3 Std. | 24 Std. |
| 1 | 40 | 3,4 | 6,3 | 11,5 |
| 2 | 38 | 2,2 | 4,3 | 8,0 |
| 3 | 35 | 3,0 | 5,5 | 8,5 |
| 4 | 40 | 2,6 | 6,5 | 14,0* |
| 5 | 50 | 3,0 | 4,5 | 8,0 |
| 6 | 30 | 2,7 | 8,0 | 11,2* |

*) mit Materialbruch.

**Ansprüche**

1. Unter dem Einfluß von Luftfeuchtigkeit aushärtbare Klebemittel, bestehend aus

a) einem 2,5 bis 25 Gew.-% an freien Isocyanatgruppen aufweisenden Umsetzungsprodukt aus

a1) mindestens einem organischen Polyisocyanat

und

a2) mindestens einem füllstoffhaltigen Polyol,

und gegebenenfalls

b) den üblichen Hilfs-und Zusatzstoffen,

dadurch gekennzeichnet, daß die Komponente a2) eine Dispersion ist mit

1) einem Polyetherpolyol,

2) einem Polymerisat radikalisch polymerisierter olefinischer Monomerer,

3) einem Pfropfpolyether aus dem Polyetherpolyol mit darauf gepfropftem Polymerisat aus radikalisch polymerisierten olefinischen Monomeren,

4) gegebenenfalls weiteren organischen Polyhydroxylverbindungen,

wobei die Dispersion durch Polymerisation der Monomeren im Polyetherpolyol erzeugt wurde und

wobei der Anteil der polymerisierten olefinischen Monomere 1 - 50 Gew.%, bezogen auf das Gesamtgewicht a2), beträgt.

2. Klebemittel nach Anspruch 1, dadurch gekennzeichnet, daß das Polyisocyanat a1) folgender Formel entspricht

Q(NCO)$_n$

in der n = 2 bis 4,

und Q einen - aliphatischen Kohlenwasserstoffrest mit 2 bis 18 C-Atomen,

-einen cycloaliphatischen Kohlenwasserstoffrest mit 4 bis 15 C-Atomen,

-einen aromatischen Kohlenwasserstoffrest mit 6 bis 15 C-Atomen,

-oder einen araliphatischen Kohlenwasserstoffrest mit 8 bis 15 C-Atomen

bedeuten.

3. Klebemittel nach wenigstens einem der vorhergehenden Ansprüche, dadurch gekennzeichnet, daß das Polyetherpolyol ein aus der Funktionalität und dem Hydroxylgruppengehalt berechenbares (mittleres) Molekulargewicht von 500 bis 9000 aufweist.

4. Klebemittel nach wenigstens einem der vorhergehenden Ansprüche, dadurch gekennzeichnet, daß die in a2) gegebenenfalls vorhandene weitere organische Polyhydroxylverbindung ein einfacher mehrwertiger Alkohol des Molekulargewichts 62 bis 599 ist.

5. Klebemittel nach wenigstens einem der vorhergehenden Ansprüche, dadurch gekennzeichnet. daß als Hilfs-und Zusatzstoff ein aus der Klebstoff-und Lacktechnologie bekanntes Lösungsmittel enthalten ist.

6. Klebemittel nach wenigstens einem der vorhergehenden Ansprüche, dadurch gekennzeichnet. daß die in der Komponente a2) vorliegenden Polymerisate bzw. Copolymerisate zu 20 bis 100 Gew.-% aus polymerisiertem bzw. copolymerisiertem Acrylnitril und zum Rest aus, zusammen mit dem Acrylnitril copolymerisiertem Styrol bestehen.

7. Klebemittel zum Verkleben beliebiger Substrate mit Hilfe eines Klebemittels, dadurch gekennzeichnet, daß als Klebemittel wenigstens eines gemäß der vorhergehenden Ansprüche verwendet wird.